# EUROPÄISCHE PATENTSCHRIFT

(11) **EP 2 528 789 B1**
(45) Veröffentlichungstag und Bekanntmachung des Hinweises auf die Patenterteilung: **13.07.2016**
(21) Anmeldenummer: 10702105.7
(22) Anmeldetag: 28.01.2010
(51) Int. Cl.: B60T 8/36, B60T 8/40, B60T 8/48

(54) **ELEKTRONISCHES STEUERGERÄT FÜR EIN BREMSSYSTEM**
ELECTRONIC CONTROL DEVICE FOR A BRAKING SYSTEM
APPAREIL DE COMMANDE ÉLECTRONIQUE POUR UN SYSTÈME DE FREINAGE

(43) Veröffentlichungstag der Anmeldung: 05.12.2012
(73) Patentinhaber: Continental Teves AG & Co. oHG, 60488 Frankfurt (DE)
(72) Erfinder: BOHN, Joachim, 56414 Hundsangen (DE); HITZEL, Michael, 63322 Rödermark (DE); SCHMIDT, Robert, 65779 Kelkheim (DE)
(86) Internationale Anmeldenummer: PCT/EP2010/051029
(87) Internationale Veröffentlichungsnummer: WO 2011/091849

(56) Entgegenhaltungen:
- EP-A2- 0 743 233
- DE-A1- 4 317 760
- DE-A1- 4 434 960
- DE-A1- 19 627 437
- DE-A1-102007 032 949

## Beschreibung

Die Erfindung betrifft ein elektronisches Steuergerät gemäß Oberbegriff von Anspruch 1.

Aus der DE 10 2007 032 949 geht ein elektronisches Bremsdruckregelaggregat mit analog ansteuerbaren Sitzventilen hervor (sogenannte A/D-Ventile). Entsprechend der Bauart von Solenoidventilen wird zum Öffnen und Schließen des Ventils ein elektrischer Ventilstrom durch eine elektrische Magnetspule geleitet, welche magnetisch den sogenannten Ventilstößel betätigt, der den hydraulischen Volumenstrom einstellt. Diese Ventile werden zunehmend als Einlassventile oder Trennventile innerhalb einer Raddruckregelung eingesetzt.

Das Bremsdruckregelaggregat umfasst für einen aktiven Druckaufbau (eigenständiger Druckaufbau ohne Bremsbetätigung durch den Fahrer) ein Druckaufbauaggregat, welches von einem Elektromotor angetrieben wird. Der mechanische Aufbau des Druckaufbauaggregats entspricht dem einer Exzenterkolbenpumpe. Diese Art von Pumpen können zwei oder mehrere Kolben umfassen. Besonders bei der Einregelung von kleinen Radbremsdrücken hat sich gezeigt, dass besonders bei Pumpen mit einer geringen Zahl von Kolben Schwankungen des geförderten Druckvolumens am Ausgang der Pumpe auftreten können, welche eine hinreichend genaue Druckeinstellung durch die elektronische Ventilregelung erschweren. Dies ist besonders bei Abner geringen Zahl von Kolben Schwankungen des geförderten Druckvolumens am Ausgang der Pumpe auftreten können, welche eine hinreichend genaue Druckeinstellung durch die elektronische Ventilregelung erschweren. Dies ist besonders bei Abstandsregelungen (ACC) störend, da bereits verhältnismäßig kleine Druckschwankungen vom Fahrer wahrgenommen werden können.

Aus der DE 43 17 760 A1 ist ein Verfahren zum Betreiben einer Bremsanlage mit einem unabhängig von einer Pedalbetätigung steuerbaren Bremsdruckgeber bekannt, bei dem der Bremsdruckgeber einen zyklisch pulsierenden Volumenstrom liefert und der durch ein Trennventil fließende Volumenstrom durch eine mit dem pulsierenden Volumenstrom synchronisierter Ansteuerung des Trennventils gedrosselt wird.

Aus der DE 44 34 960 A1 ist ein Verfahren zur Regelung des Förderdrucks einer Pumpe bekannt, bei dem durch zeitweiliges Umschalten eines Trennventils der Förderdruck der Pumpe auf niedrigere Werte begrenzt wird.

Der Erfindung liegt daher die Aufgabe zu Grunde, ein elektronisches Steuergerät anzugeben, welches ein Verfahren umfasst, mit dem der von der Pumpe erzeugte Volumenstrom geglättet werden kann und dabei die Sicherheit anderer Regelfunktionen, welche keinen in diesem Maße geglätteten Volumenstrom benötigen, nicht beeinträchtigt wird.

Diese Aufgabe wird erfindungsgemäß gelöst durch das elektronische Steuergerät gemäß Anspruch 1.

Das elektronische Steuergerät gemäß der Erfindung umfasst einen Regler, der eine Druckregelung in Kraftfahrzeugbremssystemen durchführt und mit dem über eine Ansteuerelektronik mit Strom beaufschlagbare Solenoidventile zur Druckregelung angesteuert werden. Die Solenoidventile umfassen zumindest ein Radbremskreis-Trennventil, zumindest ein Radbremsdruck-Einlassventil und zumindest ein Radbremsdruck-Auslassventil. In Abhängigkeit einer Druckanforderung wird ein Druckaufbauaggregat (z.B. Pumpe), das einen sehr genau dosierten Volumenstrom mit periodisch schwankender Amplitude am Ausgang des Aggregats erzeugt, angesteuert (aktiver Druckaufbau), wie dies zum Beispiel bei einer Abstandsregelung der Fall ist. Entsprechende Regelungen werden als nicht einen sicherheitskritischen Eingriff zur Fahrstabilitätsregelung vornehmende Regelungen bezeichnet. Das Radbremskreis-Trennventil erfüllt dabei eine Druckbegrenzungsfunktion für den zugeordneten Radbremskreis in der Weise, dass während eines aktiven Druckaufbaus überschüssiges Volumen im Bremskreis durch das sich im Regelmodus befindende Ventil dosiert in ein benachbartes Volumen abgelassen wird, wenn der durch das Aggregat aufgebaute Druck höher ist, als der einzustellende Druck. Der Druck im Bremskreis wird also durch die Pumpenleistung in Verbindung mit dem Maß des Volumenabflusses am Trennventil bestimmt.

Nach der Erfindung wird einerseits der elektrische Spulenstrom für die Betätigung des Trennventils periodisch moduliert, wobei die Periode der Modulation einer Hauptperiode der durch das Aggregat hervorgerufenen Volumen- oder Druckschwankung entspricht und wobei das Signal eines Lageerkennungsmittels des Druckaufbauaggregats berücksichtigt wird, aus dem die Periode für die Modulation ermittelt wird. Die durch die Pumpe erzeugten Schwankungen im Fördervolumen können durch diese Maßnahme stark reduziert bzw. sogar nahezu vollständig unterdrückt werden, ohne dass mechanische Mittel, wie zum Beispiel Kaskadenblenden im Bereich des Pumpenausgangs vorhanden sein müssen. Erfindungsgemäß wird die periodische Ansteuerung des Trennventils während eines aktiven Druckaufbaus bei einer einen nicht sicherheitskritischen Eingriff zur Fahrstabilisierung darstellenden Abstandsregelung durchgeführt. Andererseits wird überwacht, ob eine einen sicherheitskritischen Eingriff zur Fahrstabilisierung darstellende Regelung, umfassend Blockierschutzregelung (Antiblockiersystem, ABS) und Fahrdynamikregelung (ESP, ESC), durchgeführt werden muss. Ist dies der Fall, wird zumindest dann die periodische Ansteuerung des zur Glättung des Pumpenstroms herangezogenen Solenoidventils abgebrochen. Vorzugsweise umfasst die Liste der vorstehenden Regelungen auch weitere Regelfunktionen, welche primär Einfluss auf die Fahrstabilität haben.

Erfindungsgemäß wird eine Bestimmung der Periode der Modulation durch ein am Druckaufbauaggregat oder an einem zugeordneten Elektromotor angeordnetes Lageerkennungsmittel herbeigeführt. Das Lagererkennungsmittel ist nach einer ersten bevorzugten Ausführungsform vorzugsweise ein Weg- oder Winkelsensor, welcher mit einem beweglichen Teil des Druckaufbauaggregats verbunden ist. Bevorzugt wird entsprechend der Position des Exzenters oder des Kolbens der Pumpe oder der Phasenlage (Winkellage) eines mit der Pumpe verbundenen Motorankers eine geeignete Modulation des Trennventilstroms mit einer Kurve durchgeführt, deren Form in Abhängigkeit der gewünschten Korrekturqualität und den schaltungstechnischen Möglichkeiten geeignet gewählt werden muss. Der Verlauf der Kurve und deren Einfluss auf die Beseitigung der Volumenstromschwankungen lässt sich dabei ohne weiteres experimentell ermitteln. Es ist zweckmäßig, dass der theoretisch optimale Verlauf der Kurve zur einfacheren elektrischen Umsetzung vereinfacht wird. Bevorzugt handelt es sich bei der Kurve für die Strommodulation daher um eine Rechteck-, Dreiecks- oder Sinuskurve. Die Winkellage des Druckaufbauaggregats oder des das Aggregat ansteuernden Motors kann beispielsweise nach dem in der DE 10 2008 018 818 beschriebenen Verfahren erfolgen.

Gemäß einer weiteren bevorzugten Ausführungsform für ein Lageerkennungsmittel handelt es sich um eine Einrichtung, die die Rotorlage eines bürstenlos angesteuerten Elektromotors feststellt. Im Falle eines bürstenlos angesteuerten Elektromotors mit einem Positionssensor kann beispielsweise das Sensorsignal oder die Elektronik für den Motor zur Erkennung der Rotorlage ausgenutzt werden. Im Falle eines bürstenlosen Elektromotors ohne Positionssensoren kann die Rotorposition des Elektromotors beipielsweise aus den Signalen der Motoransteuerungselektronik gewonnen werden.

Gemäß einer alternativ zum Lageerkennungsmittel ebenfalls bevorzugten Ausführungsform wird die Periode für die Druckmodulation nicht mit einem Lageerkennungsmittel am Aggregat oder Motor, sondern aus der Ansteuerelektronik für den Trennventilstrom, also über den Druckverlauf direkt oder durch Auswertung eines sonstigen druckabhängigen Signals (z.B. Drucksensor) abgeleitet. Der magnetische Fluss im Bereich des Ansteuermagnetfelds des zur Beobachtung der Fluktuationen herangezogenen Fluidventils lässt Rückschlüsse auf die Pumpenfluktuationen zu, da diese über die Fluid-Verbindungsleitungen auf den Stößel des Ventils einwirken. Bevorzugt wird die hervorgerufene Flussänderung über das Induktionssignal mittels einer Stromschleife im Magnetkreis des Fluidventils bestimmt. Das zur Druckbestimmung herangezogene Fluidventil steht insbesondere in hydraulischer Verbindung mit der Ausgangsseite der Pumpe. Die Auswertung des Induktionssignals lässt einen Rückschluss auf die Periode der Druckfluktuationen zu, da die Periode des Induktionssignals im wesentlichen mit der Periode der Druckfluktuationen übereinstimmt.

Zusätzlich zu den oben beschriebenen Maßnahmen kann zweckmäßigerweise die Pumpenleistung zur Optimierung der Regelung zusätzlich geeignet eingestellt oder mit einem Regler eingeregelt werden. Besonders bevorzugt wird hierzu, wie in der DE 10 2008 018 818 beschrieben, der Motorstrom während des Motorumlaufs in geeigneter Weise moduliert.

Wie bereits weiter oben beschrieben, ändert sich bei einer durch eine periodische oder auch nicht periodische Druckänderung am zur Messung des Drucks herangezogenen Magnetventils (Differenzdruckänderung) hervorgerufenen Stößelbewegung das Magnetfeld, genauer gesagt, der magnetische Fluss, im Bereich der Ventilspule. Diese Änderung lässt sich gemäß einer ersten bevorzugten Ausführungsform mit einer Stromschleife im Bereich des Spulenmagnetfelds oder direkt über die Ansteuerspule bestimmen. Beim sogenannten TPM-Verfahren wird bevorzugt durch die Ansteuerelektronik die Position des Ventilstößels oder die Stößelkraft mittels einer Regelung auf einen bestimmten Sollwert eingestellt. Als Istgröße wird dabei insbesondere ein im Bereich der Ventilspule aufgenommenes Induktionssignal der Stromschleife herangezogen. Eine Auswertung der Stößelreaktion ist besonders empfindlich dann möglich, wenn sich der Stößel im oder in der Nähe eines Kräftegleichgewichts zwischen Magnetkraft (abzüglich oder zuzüglich der Federkraft) und hydraulischer Kraft befindet. Liegen die Kräfte weit auseinander, kann der Stößel nicht bzw. nicht ausreichend empfindlich auf eine Druckänderung reagieren. Es kann nun sein, dass der Stößel auf eine Druckänderung am Ventil nur minimal reagiert, ohne dass sich die Stößelposition merklich ändert. Allerdings kann die TPM-Regelungselektronik den Ventilstrom nach einer bevorzugten Ausführungsform so weit nachführen, dass die vorgegebene Stößelstellung nicht verändert wird. In diesem Fall ändern sich nur die Kräfteverhältnisse am Ventil (auf Grund einer höheren Druckdifferenz wird ein größerer Ventilstrom eingestellt). Die Druckpulsationen sind in diesem Fall nur an einer in der Regelung verarbeiteten Stellgröße oder an den Istwertänderungen feststellbar. Gemäß einer weiteren bevorzugten Ausführungsform wird die Flussänderung daher über Änderungen der Stellgrößen oder der Istgrößen innerhalb der TPM-Regelung bestimmt.

Die Erfindung betrifft außerdem die Verwendung des vorstehend beschriebenen Steuergeräts im Zusammenhang mit Abstandsregelungen (ACC). Das Steuergerät umfasst weitere Regelfunktionen, wie zumindest Antiblockiersystem und elektronisches Stabilitätsprogramm (ESP) oder ggf. weitere Regelungen, wie Antriebsschlupfregelung (ASR, TCS) etc..

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: eine schematische Darstellung einer Bremsvorrichtung für ABS-, TCS, ACC- und ESP-Regelvorgänge und
- Fig. 2: Druck- und Ventilstromverläufe, die den Einfluss der Trennventilstrommodulation verdeutlichen.

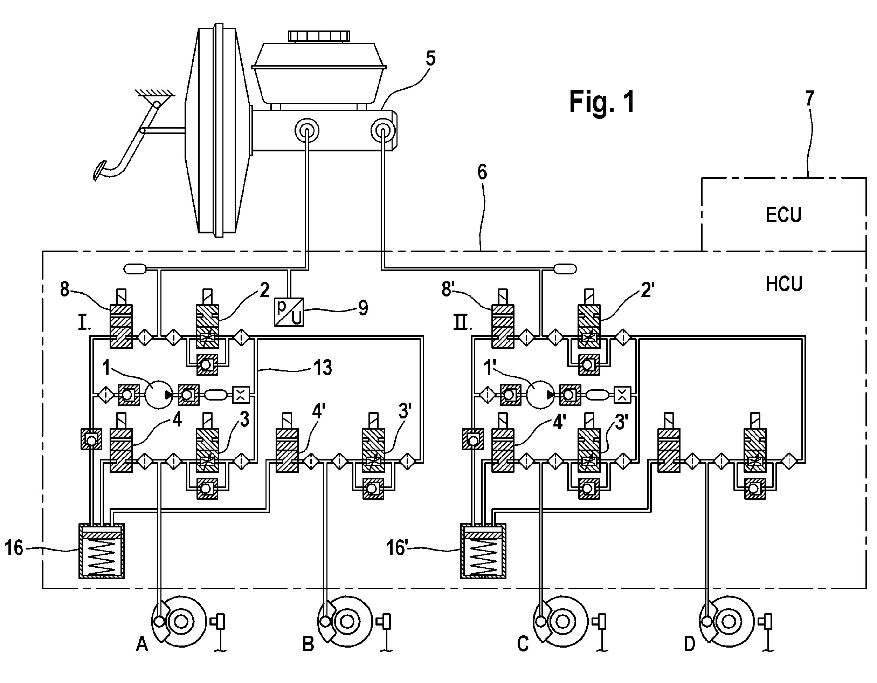

In Fig. 1 ist Tandemhauptzylinder 5 mit Hydraulikeinheit 6 (HCU) eines elektronischen Kraftfahrzeugbremssystems verbunden. Elektronikeinheit 7 (ECU) umfasst ein Mikroprozessor/controllersystem, mit dem die im Ventilblock enthaltenen Aktuatoren und Sensoren elektronisch gesteuert bzw. ausgemessen werden können. Hydraulikeinheit 6 ist in zwei Bremskreise I und II aufgeteilt. Ferner umfasst jeder der Bremskreise je zwei Raddruckkreise (A, B bzw. C, D) mit jeweils einem Einlass- 3 bzw. 3' und einem Auslassventil 4 bzw. 4'. Die Elektronik der ECU 7 umfasst einen mehrkanaligen Stromregler, welcher eine unabhängige Regelung der Ströme durch die Spulen der Trennventile 2, 2' und der Einlassventile 3, 3' erlaubt. Bezugszeichen 8 bzw. 8' bezeichnen stromlos geschlossene elektronische Umschaltventile. In der zu Hauptzylinder 5 führenden Hydraulikleitung 8 befindet sich ein Eingangsdrucksensor 9. Das dargestellte Bremssystem umfasst in den Raddruckkreisen selbst keine weiteren Drucksensoren. Motor-Pumpenaggregat 1 bzw. 1' dient dem aktiven Druckaufbau bei ACC-, TCS- und ESP-Regelungen sowie zur Rückförderung des an den Auslassventilen ausgetretenen Druckmittels, welches sich in Niederdruckspeicher 16 bzw. 16' befindet. Wenn Pumpe 1 angeschaltet ist, fördert diese Druckvolumen in Richtung von Leitung 13, so dass sich der Vordruck erhöht. Auf Grund des zweizylindrigen Aufbaus der Pumpe pulsiert der der Strom des geförderten Volumens (Hydraulikflüssigkeit) am Ausgang der Pumpe in einem vom Aufbau der hydraulischen Komponenten abhängigen Druckbereich.

Während einer Abstandsregelung (ACC) wird Pumpe 1 entsprechend der gewünschten Förderleistung und dem einzustellenden Druck mit einem vorgegebenen PWM-Strom angesteuert. Trennventil 2 wird als A/D-Ventil im Überstrommodus betrieben, so dass der Druck im Radbremskreis des entsprechenden Trennventils für den gesamten Kreis eingeregelt werden kann. Dabei wird der Ventilstößel von der in der ECU 7 integrierten elektronischen Regelschaltung in einer geeigneten Zwischenstellung gehalten.

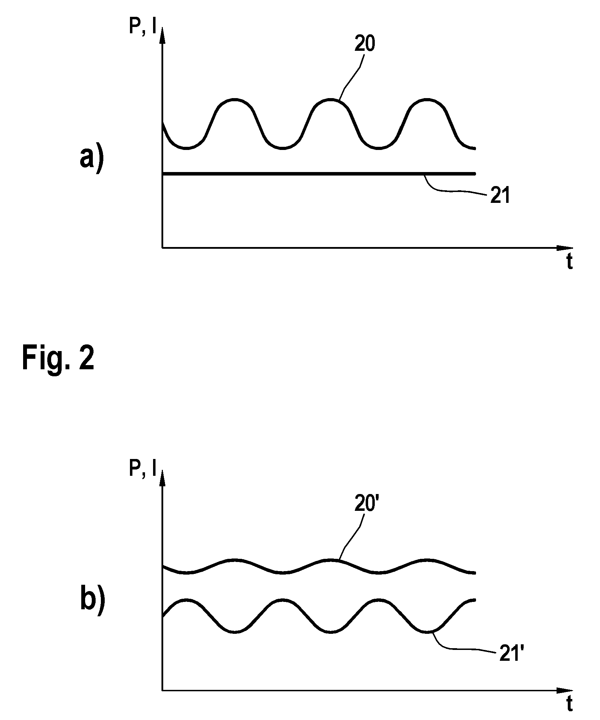

Das Diagramm in Teilbild a) von Fig. 2 zeigt den Druck- und Ventilstromverlauf ohne die erfindungsgemäße Ventilstrommodulation. Den zeitlichen Verlauf des Raddrucks zeigt Kurve 20. Der Modulationsstrom mit dem das Trennventil 2 beaufschlagt wird, ist durch Kurve 21 dargestellt.

In Teilbild b) von Fig. 2 ist der Druck- und Stromverlauf bei Modulation des Trennventilstroms gezeigt. Den Kurvenverlauf des Trennventilsstroms gibt Kurve 21' an. Kurve 20' zeigt den zeitlichen Verlauf des Raddrucks mit Trennventilmodulation. Gegenüber Druckkurve 20 in Teilbild a) sind die Druckschwankungen deutlich verringert.

Wird während einer ACC-Regelung von einer übergeordneten Überwachung eine ABS- oder ESP-Regelung eingeleitet, wird die periodische Ansteuerung des Trennventils so lange unterbrochen, bis wieder ausschließlich eine Anforderung für eine ACC-Regelung vorliegt.

## Patentansprüche

1. Elektronisches Steuergerät (7) umfassend einen Regler, der eine Druckregelung in einem Kraftfahrzeugbremssystemen durchführt und mit dem über eine Ansteuerelektronik Solenoidventile zur Druckregelung mit Strom angesteuert werden, wobei die Ventile zumindest ein Radbremskreis-Trennventil (2, 2'), zumindest ein Radbremsdruck-Einlassventil (3, 3') und zumindest ein Radbremsdruck-Auslassventil (4, 4') umfassen, bei dem weiterhin in Abhängigkeit einer Druckanforderung ein Druckaufbauaggregat (1, 1') angesteuert wird, das einen Volumenstrom mit periodisch schwankender Amplitude am Ausgang des Aggregats (1, 1') erzeugt, wobei während eines aktiven Druckaufbaus bei einer Regelung das Radbremskreis-Trennventil (2, 2') dosiert einen Teil des Fördervolumens aus dem zugeordneten Radbremskreis in ein Nachbarvolumen ablässt, wenn der durch das Aggregat (1, 1') aufgebaute Druck höher ist, als der einzustellende Druck, wobei der elektrische Spulenstrom (21') für die Betätigung des Trennventils (2, 2') periodisch moduliert wird, wobei die Periode der Modulation einer Hauptperiode der durch das Aggregat (1, 1') hervorgerufenen Volumen- oder Druckschwankung entspricht und wobei das Signal eines Lageerkennungsmittels des Druckaufbauaggregats (1, 1') berücksichtigt wird, aus dem die Periode für die Modulation ermittelt wird, **dadurch gekennzeichnet, dass** die periodische Ansteuerung des Trennventils (2, 2') während eines aktiven Druckaufbaus bei einer einen nicht sicherheitskritischen Eingriff zur Fahrstabilisierung darstellenden Abstandsregelung durchgeführt wird, und die periodische Ansteuerung des Trennventils (2, 2') zumindest dann abgebrochen wird, wenn das Steuergerät einen sicherheitskritischen Eingriff zur Fahrstabilisierung durchführen muss, wobei der sicherheitskritische Eingriff die Regelungen Blockierschutzregelung und Fahrdynamikregelung umfasst.

2. Steuergerät nach Anspruch 1, wobei die periodische Ansteuerung des Trennventils (2, 2') bei Durchführung eines sicherheitskritischen Eingriffs so lange unterbrochen wird, bis wieder ausschließlich eine Anforderung der Abstandsregelung vorliegt.

3. Steuergerät nach Anspruch 1 oder 2, **dadurch gekennzeichnet, dass** die Periode für die Druckmodulation aus der Ansteuerelektronik für den Trennventilstrom abgeleitet wird.

4. Steuergerät nach mindestens einem der Ansprüche 1 bis 3, **dadurch gekennzeichnet, dass** eine elektronische Auswertung der Stößelstellung des Trennventils (2, 2') vorgenommen und die Änderung des magnetischen Flusses über das Induktionssignal einer Stromschleife im Magnetkreis des Trennventils (2, 2') bestimmt wird und zur Bestimmung der Bewegungshäufigkeit die Signalschwingungen des Induktionssignals analysiert werden.

5. Steuergerät nach mindestens einem der Ansprüche 1 bis 4, **dadurch gekennzeichnet, dass** der Ansteuerstrom (21') des Trennventils (2, 2') mittels eines Stromreglers eingeregelt wird.

6. Steuergerät nach mindestens einem der Ansprüche 1 bis 5, **dadurch gekennzeichnet, dass** der Motorstrom eines das Druckaufbauaggregat (1, 1') ansteuernden Elektromotors während des Motorumlaufs in geeigneter Weise moduliert wird.

7. Steuergerät nach mindestens einem der Ansprüche 1 bis 6, **dadurch gekennzeichnet, dass**
das Druckaufbauaggregat (1, 1') eine Exzenterpumpe ist, insbesondere eine solche vom Zweikolbentyp.

## Claims

1. Electronic control device (7) comprising a controller which carries out a pressure control operation in a motor vehicle braking system and by way of which solenoid valves for pressure control are actuated with current via an actuating electronic system, the valves comprising at least one wheel brake circuit isolating valve (2, 2'), at least one wheel brake pressure inlet valve (3, 3') and at least one wheel brake pressure outlet valve (4, 4'), in which electronic control device, furthermore, a pressure build-up assembly (1, 1') is actuated as a function of a pressure request, which pressure build-up assembly generates a volumetric flow with a periodically fluctuating amplitude at the outlet of the assembly (1, 1'), the wheel brake circuit isolating valve (2, 2'), during an active pressure build-up, discharging part of the delivery volume in a metered manner out of the associated wheel brake circuit into a neighboring volume, in the case of a control operation, if the pressure which is built up by the assembly (1, 1') is higher than the pressure which is to be set, the electric coil current (21') for the actuation of the isolating valve (2, 2') being modulated periodically, the cycle of the modulation corresponding to a major cycle of the volumetric or pressure fluctuation which is caused by the assembly(1, 1') and the signal of a position detection means of the pressure build-up assembly (1, 1') being taken into consideration, from which signal the cycle for the modulation is determined, **characterized in that** the periodic actuation of the isolating valve (2, 2'), during an active pressure build-up, is carried out in the case of a distance control operation which represents an intervention for driving stability which is not critical to safety, and the periodic actuation of the isolating valve (2, 2') is interrupted at least when the control device has to carry out an intervention for driving stability which is critical to safety, the safety-critical control operation comprising the intervention of skid control and road handling control.

2. Control device according to Claim 1, the periodic actuation of the isolating valve (2, 2'), during execution of an intervention which is critical to safety, being interrupted until there is again exclusively a request for the distance control operation.

3. Control device according to Claim 1 or 2, **characterized in that** the cycle for the pressure modulation is derived from the actuating electronic system for the isolating valve current.

4. Control device according to at least one of Claims 1 to 3, **characterized in that** an electronic evaluation of the plunger position of the isolating valve (2, 2') is performed and the change in the magnetic flux is determined via the induction signal of a current loop in the magnetic circuit of the isolating valve (2, 2'), and the signal oscillations of the induction signal are analyzed in order to determine the movement frequency.

5. Control device according to at least one of Claims 1 to 4, **characterized in that** the actuating current (21') of the isolating valve (2, 2') is adjusted by means of a current controller.

6. Control device according to at least one of Claims 1 to 5, **characterized in that** the motor current of an electric motor which actuates the pressure build-up assembly is modulated in a suitable way while the motor is revolving.

7. Control device according to at least one of Claims 1 to 6, **characterized in that** the pressure build-up assembly (1, 1') is an eccentric pump, in particular one of the two-piston type.

## Revendications

1. Appareil de commande électronique (7) comprenant un régulateur qui exécute une régulation de pression dans un système de freinage de véhicule et au moyen duquel des électrovannes sont commandées par l'intermédiaire d'une électronique de commande pour réguler la pression à l'aide d'un courant, dans lequel les vannes comprennent au moins une vanne d'isolement de circuit de freinage de roues (2, 2'), au moins une vanne d'admission de pression de freinage de roues (3, 3') et au moins une vanne de sortie de pression de freinage de roues (4, 4'), dans lequel il est en outre fait en sorte de commander en fonction d'une demande de pression un ensemble accumulateur de pression (1, 1') qui génère un débit volumétrique ayant une amplitude oscillant périodiquement à la sortie de l'ensemble (1, 1'), dans lequel, pendant une accumulation de pression active lors d'une régulation de la vanne d'isolement de circuit de freinage de roues (2, 2'), une partie du volume refoulé hors du circuit de freinage de roues associé est expulsée de manière dosée dans un volume voisin lorsque la pression accumulée par l'intermédiaire de l'ensemble (1, 1') est supérieure à la pression devant être établie, dans lequel le courant de bobine électrique (21') destiné à l'actionnement de la vanne d'isolement (2, 2') est modulé périodiquement, dans lequel la période de la modulation correspond à une période principale de l'oscillation de volume ou de pression provoquée par l'ensemble (1, 1') et dans lequel il est fait en sorte de prendre en compte le signal d'un moyen de détection de position de l'ensemble accumulateur de pression (1, 1'), à partir duquel est déterminée la période de modulation, **caractérisé en ce que** la commande périodique de la vanne d'isolement (2, 2') est effectuée pendant une accumulation de pression active lors d'un accès non critique vis-à-vis de la sécurité à une régulation de distance représentant une stabilisation de la conduite, et la commande périodique de la vanne d'isolement (2, 2') n'est interrompue que lorsque l'appareil de commande doit effectuer un accès critique du point de vue de la sécurité à une stabilisation de la conduite, dans lequel l'accès critique du point de vue de la sécurité comprend les régulations consistant en une régulation antiblocage et en une régulation de la dynamique de mouvement.

2. Appareil de commande selon la revendication 1, dans lequel la commande périodique de la vanne d'isolement (2, 2') est interrompue par exécution d'un accès critique du point de vue de la sécurité jusqu'à ce qu'une demande de régulation de distance soit de nouveau exclusivement présente.

3. Appareil de commande selon la revendication 1 ou 2, **caractérisé en ce que** la période de modulation de pression est déduite à partir de l'électronique de commande destinée au courant de la vanne d'isolement.

4. Appareil de commande selon au moins l'une des revendications 1 à 3, **caractérisé en ce qu'**une évaluation électronique de la position du poussoir de la vanne d'isolement (2, 2') est effectuée et **en ce que** la modification du flux magnétique est déterminée par l'intermédiaire du signal d'induction d'une boucle de courant dans le circuit magnétique de la vanne d'isolement (2, 2') et **en ce que** les oscillations de signal du signal d'induction sont analysées pour déterminer la fréquence de mouvement.

5. Appareil de commande selon au moins l'une des revendications 1 à 4, **caractérisé en ce que** le courant de commande (21') de la vanne d'isolement (2, 2') est régulé au moyen d'un régulateur de courant.

6. Appareil de commande selon au moins l'une des revendications 1 à 5, **caractérisé en ce que** le courant de moteur d'un moteur électrique commandant l'ensemble accumulateur de pression (1, 1') est modulé de manière appropriée pendant le fonctionnement du moteur.

7. Appareil de commande selon au moins l'une des revendications 1 à 6, **caractérisé en ce que** l'ensemble accumulateur de pression (1, 1') est une pompe à excentrique, notamment une pompe du type à deux pistons.
